# EUROPEAN PATENT SPECIFICATION

(11) **EP 2 986 152 B1**
(45) Date of publication and mention of the grant of the patent: **05.04.2017**
(21) Application number: 13729063.1
(22) Date of filing: 09.04.2013
(51) Int. Cl.: A23L 29/256

(54) **FOOD AND BEVERAGE ADDITIVE**
LEBENSMITTEL- UND GETRÄNKEZUSATZ
ADDITIF POUR PRODUITS ALIMENTAIRES ET BOISSONS

(43) Date of publication of application: 24.02.2016
(73) Proprietor: Koninklijke Douwe Egberts B.V., 3532 AD Utrecht (NL)
(72) Inventor: MELROSE, John, Great Bourton Oxfordshire OX17 1RW (GB); NORTON, Ian, Birmingham West Midlands B15 2TT (GB); FARRES, Isabel, Birmingham West Midlands B15 2TT (GB); MASSEY, Tulay, Banbury Oxfordshire 0X16 1AA (GB)
(74) Representative: Boult Wade Tennant
(86) International application number: PCT/IB2013/000893
(87) International publication number: WO 2014/167373

(56) References cited:
- EP-A1- 2 233 051
- WO-A1-89/12403
- WO-A2-03/096976

## Description

This disclosure relates to an additive for inclusion in food and beverage compositions. In particular, the disclosure relates to edible gel particles which can be used to provide a unique mouthfeel or act as a fat substitute. The gel particles described herein are especially suitable for providing luxury beverages with a thick and creamy texture, while at the same time avoiding the need to include high fat levels in the beverage composition.

There is a great interest among consumers to prepare beverages in the home environment which mimic those produced in cafes and restaurants, However, in recent years the consumer has become more health conscious and there is, therefore, a desire to avoid the high calorie and fattening ingredients that are relied upon by cafes to produce luxurious beverages. This is especially the case when considering home beverage preparation machines which may be used daily, rather than beverages consumed occasionally in cafes.

On-demand beverage systems may be used to produce beverages in the home. These typically rely on the use of sealed, machine-insertable cartridges which include ingredients for a single beverage. Hot water is introduced into the cartridge to reconstitute and flush a beverage into a beverage receptacle. The luxury beverages may be produced in these machines are typically limited to hot chocolate, cappuccino or latte beverages, which may be thickened by the introduction of trapped air or the use of ingredients such as milk solids.

It is also known to include thickeners in cartridges suitable for use in beverage preparation machines. EP2233051, for example, discloses the use of thickeners, including thermally reversible gelling thickeners, such as methyl cellulose. EP2233051 also discloses the use of alginates in combination with calcium ions which may be included in the beverage composition. The use of the thickeners according to EP2233051 is to provide a thicker final beverage. That is, the addition of water to the ingredients in the beverage cartridge initiates a reaction which completes in the beverage receptacle. Accordingly, the final beverage has an internal gel network which provides a unique thickened beverage. However, the use of these thickeners can lead to an overly thickened beverage and the compositions comprising these thickeners present difficulties for pasteurisation. A further constraint is that it is important to get the enhanced texture in the cup, rather than in the capsule, as the extreme thickness in the capsule will render drink preparation/brewing inefficient, resulting in watery drinks that lack solids and mouthfeel

WO 89/12403 discloses an alginate-based cream substitute for addition to food products, said substitute comprising calcium alginate microparticles obtained from a solution of sodium alginate and calcium chloride subjected to a high-shear mixing operation.

WO 03/096976 discloses a beverage additive comprising spray-dried MCC-calcium alginate microparticles obtained from a solution comprising sodium alginate and calcium chloride subjected to high shear forces.

In particular, when functional ingredients are used in beverage cartridges, especially with liquid beverage ingredients, they often only fulfil their functionality (such as enhanced texture/gelling or improved mouthfeel) once they have been fully hydrated or heated. This typically constrains the number and type of functional ingredients that can be included within a capsule/cartridge due to processing limitations (e.g. in package pasteurisation). This, coupled with the addition of water during preparation beverages, results in lack of mouthfeel.

Accordingly, it is desirable to provide an improved food or beverage additive and/or tackle at least some of the problems associated with the prior art or, at least, to provide a commercially useful alternative thereto.

Accordingly, in a first aspect the present disclosure provides a method for the manufacture of edible gel particles having a mean longest diameter of from 0.1 to 20 µm, the method comprising:
high-shear mixing a solution comprising an alginate, while adding a source of calcium ions to the solution, wherein the source of calcium ions comprises calcium carbonate, and wherein the solution and/or the source of calcium ions comprises a source of slowly released protons.

The present invention will now be further described. In the following passages different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

The inventors have discovered an alternative to the produced-in-situ thickeners of the prior art. In particular, the inventors have found that it is possible to manufacture small particles of gel (or "beads") which can be provided as an additive in foods or drinks. By edible it is, of course, meant that the particles are fit to be eaten.

The inventors have found that these particles have a surprising effect on the mouthfeel of food and drinks compositions. In fluid environments, in particular, the particles behave as fluid gels and these provide improved textural organoleptic properties. Nonetheless, since the particles are pre-gelled, they do not form the extended jelly-like structure that might be obtained with in-situ gelling systems. Instead, the particles mimic more closely the fat particles present in most luxury creamy beverages, without adding to the calorific content in the same way.

That is, the inventors have found that a similar (but different mouthfeel) effect can be achieved using traditional thickening/gelling agents in the form of novel pre-gelled structures that behave like fluids. This avoids a number of the disadvantages associated with traditional thickener use.

The inventors have further found that the key to these particles lies in their thermal stability. This stability results from the manufacture of the particles in accordance with the method disclosed herein. It will be appreciated that fine gel particles could simply be produced by finely dividing an expanded gel structure. However, the inventors found that such particles lack the thermal stability achieved with the present method. Without wishing to be bound by theory, it is speculated that the instantaneous nature of the mixing experienced by the ingredients causes the formation of more tightly bound gel particles that are less prone to decomposition. On the contrary, it appears that finely chopped gels have broken chains and are more readily decomposed on heating.

Accordingly, the method provides for the manufacture of gel particles. Gels are well known in the art and, in particular, alginate gels formed with calcium ions are well known in the art for a wide range of applications.

The gel particles have a mean longest diameter of from 0.1 to 20 µm. This diameter can be readily measured with optical methods. Light scattering techniques could not be used to measure the size of fluid gel particles because their refractive index is very similar to that of the suspending medium (water). For that reason the size of the particles were determined by microscopic examination using an optical microscope (Brunel Microscopes Ltd SP300F, UK) equipped with a camera (Canon EOS 1000D, Japan). Polarized light was employed to increase the contrast, allowing the average diameter of the microgel particle sizes to be measured (over a 50 total) in pixels using ImageJ software. Pixels were then converted into mm using a conversion factor previously obtained by calibration using a known length graticulate.

Preferably the gel particles have a mean longest diameter of from 1 to 10 µm, more preferably from 3 to 8 µm. These small particles have been found to provide a balance between being of a sufficient size to be discernable in a final beverage, while being sufficiently thermally stable. Larger particles have a reduced stability, whereas smaller particles do not sufficiently contribute to the mouthfeel of the final product.

Preferably the particle size distribution of the gel particles is narrow. The particle size distribution can be characterised by the values of the D50, the D10 and the D90. These parameters are well known in the art, especially for coffee grind sizes. The D90 is the value for which only 10% by volume of the particles have a greater size. Preferably, the gel particles have a D90 of at most 50 µm, more preferably at most 20 µm and most preferably at most 15 µm. Preferably, the gel particles have a D10 of at least 0.1 µm, more preferably at least 0.5 µm.

Despite the small particle size of the gel particles, there is a significant effect on the mouthfeel when they are consumed in a beverage it is theorised that the texture or oral perception of food hydrocolloids is related to its thin film rheological behaviour as well as to its bulk properties.

The method comprises the step of high-shear mixing. High shear mixing is a term in the art and exemplary high-shear mixers are commonly available. Such mixers are designed to ensure that there are at least regions within the mixer where the shear force exerted on the composition to be mixed are extremely high. The preferred high-shear mixer is a pin-stirrer, which is discussed in more details below.

The ingredients for forming the particles are a solution comprising an alginate and a source of calcium ions to the solution. The calcium ions are added within the high-shear mixer. The inventors found that without this, the mixer did not achieve a product with the same thermal stability. That is, it appeared that without the high-shear addition of the calcium, the mixer was simply breaking up pre-gelled material and the product was prone to thermal decomposition.

Preferably the solution is an aqueous solution and comprises an alginate in an amount of from 0.1 to 10% w/w, more preferably in the range of from 0.2-5% and most preferably from 0.5 to 3%. The inventors have found that the alginate concentration can have an effect on the particle size of the final gel particles. It is theorised that higher concentrations lead to the production of more small particles under the high shear conditions, since these can be formed more quickly with the greater alginate content. By way of example, the particle sizes which can be obtained are set out in the table below.

**Table 1**

| Alginate concentration [w/w %] | Particle diameter (D_{1,0}) [µm] |
|---|---|
| 1 | 9.5 ± 2 |
| 2 | 8.7 ± 3 |
| 3 | 3.8 ± 4 |
| 4 | 3.4 ± 4 |

Preferably the alginate comprises alginate extracted from brown seaweed. The term "alginate" is well-known in the art. Commercial alginates tend to be derived from a variety of seaweed sources since these are the most cost effective sources. Different seaweeds produce alginates of different monomeric composition and block structure and therefore the calcium reactivity of an alginate may depend on its source. In particular, alginates may comprise a linear co-polymer comprising-D-mannuronic acid and L-guluronic acid monomeric units. These monomers may occur in the alginate molecule as blocks of individual monomer units (M-blocks or G-blocks), or as regions in which the monomers approximate an alternating sequence. Alginates may be referred to as "high M" or "high G", depending on the proportions of mannuronic acid and guluronic acid they contain. An example of a high M alginate is that obtained from giant kelp, Macrocystis pyrifera, harvested off the California coast. One mechanism of thickening of the alginates is thought to be the alignment of two buckled G-block regions resulting in a diamond shaped hole having dimensions that are ideal for the cooperative binding of divalent ions, such as calcium ions. In the present invention, high M alginates (e.g. ones having a M content as a proportion of the total number of M and G units of over 50%) may be used because of their controllable thickening characteristics.

The alginate may be a soluble alginate and, as such, is preferably soluble in water at 20°C. As such, preferably the alginate completely dissolves in water at 20°C. Examples of soluble alginates are well-known in the art. They include sodium; potassium and ammonium alginate. In theory, any mono-valent ion may be used to provide the alginate, such as any group one metal. A particularly preferred alginate is sodium alginate, which the inventors have found to be particularly versatile in its properties and its reliability in thickening.

The preferred Calcium ion source has a calcium ion concentration of from 0.1 to 2%w/w, more preferably about 0.5%.

The source of calcium ions comprises calcium carbonate. While this is less soluble, than e.g. calcium chloride, the use of calcium carbonate further allows for a slow release of the calcium into the mixing system. This means that there is a greater likelihood of the gel particles being formed in the high-shear regions of the mixer. As a result, the particles are more tightly formed and have a greater thermal stability.

The solution and/or the source of calcium ions comprises a source of slowly released protons, preferably glucono-δ-lactone. This slow release source of protons causes the decomposition of the calcium carbonate in-situ, releasing the calcium ions for reaction with the alginate.

Preferably the high-shear mixing is conducted in a pin stirrer. Pin stirrers are very efficient at mixing and ensuring regions of high shear. Preferably the high-shear mixing is conducted for an average residence time of from 5 to 15 minutes and/or at a rotational mixing speed to from 1000 to 2000 RPM. These conditions are suitable for the formation of the required small gel particles. Slower speeds or shorter residency times tend to promote the formation of larger particles.

Preferably the applied shear rate on the solution comprising an alginate is 100s⁻¹ or more. Preferably the applied shear rate on the solution comprising an alginate is from 200s⁻¹ to 800s⁻¹. The shear may be measured with a rheometer with vane geometry, as discussed below.

Preferably the method further comprises a step of heat-treating the particles at a temperature of from 80-130°C. That is, the particles may be subjected to a heat treatment, for example; pasteurisation, to ensure that they are food safe. This heat-treatment may be carried out in the presence of other food ingredients.and even in a sealed container, such as a beverage cartridge. Pasteurisation techniques are well known in the art and will depend on the final intended product and container employed.

Preferably the source of calcium ions is added by injection into a high-shear region of the high-shear-mixed solution. The injection of the ions allows fine control on the amount of the calcium added and the relative ratio of the calcium and the alginate can be controlled. Preferably the calcium ions are added in a ratio by weight to the alginate of from 1:20 to 1:1, more preferably from 1:10 to 1:2 and most preferably from 1:3 to 1:6. Furthermore, the injection into a high shear region ensures that the alginate and calcium ions are subjected to high shear mixing when added.

Preferably the method further comprises spray drying the gel particles. The act of spray drying the gel particles permits the use of the particles in dry formulations and food compositions. Surprisingly, and presumably as a result of the general stability of the particles, it has been found that the gel retains its properties when reconstituted either in water or on consumption.

As discussed above the gel particles are generally stable, even at elevated temperatures. Preferably the gel particles are stable for at least 1 minute at a temperature of 80°C. That is, they do not lose their shape or fluid flow properties. Preferably the gel particles are stable for at least 1 minute, preferably 5 minutes and more preferably at least 10 minutes, especially in an aqueous environment, at a temperature of 80*C, preferably 90°C and most preferably, even at 100°C.

One alternative method for measuring the stability of the particles is to measure the shear viscosity of the particles before and after heat treatment. It is preferred that after least 1 minute at a temperature of 80°C the shear viscosity of the gel particles (measured between 0.1s⁻¹ and 50s⁻¹) does not change by more than 20%.

According to a second aspect there is provided a composition comprising gel particles having a mean longest diameter of from 0.1 to 20 µm, obtainable by the method disclosed herein. As will be appreciated, those parameters and features disclosed in relation to the method apply equally to the product of the second aspect.

In particular, there is provided a food composition, preferably comprising biscuit and/or chocolate. The gel particles may be included in these compositions as a fat substitute. Other possible applications include margarine spreads, spreadable cheeses, mayonnaises and the like. The inventors have further found that the gel particles provide serve to increase a feeling of satiety and suppress appetite. They therefore make an excellent diet supplement since they avoid fat, provide a luxurious food, and avoid the fast return of hunger.

Alternatively, there is provided a beverage composition and further comprising a flavouring component. Beverages that are prepared in this way include, but are not limited to, coffee, tea and hot chocolate. It is to be noted that the terms "brewed" and "diluted" are used interchangeably herein to refer both to the brewing of, for example, coffee and tea and to the dilution of, for example, a chocolate concentrate.

The beverage composition is preferably for a coffee, milk or chocolate beverage.

The inventors have recognised that some beverages may benefit from having thickeners added to them. For example, some flavoured coffees may benefit from the addition of thickeners to the beverage. Examples of flavours added to coffee include, but are not limited to, cocoa (including chocolate), vanilla, alcoholic (including liqueur flavour), caramel, mint, dairy, herbs, spices (including cinnamon), nuts and / or berries.

The beverage composition is preferably in liquid form. "Liquid form" refers to a composition containing one or more ingredients that is liquid at ambient temperature (e.g. room temperature, such as 20°C). The liquid ingredient contained in the beverage concentrate may, for example, comprise water, alternatively or additionally, the liquid ingredient may, for example, comprise corn syrup (e.g. glucose syrup) and / or other syrups containing mono-, di- or polysaccharides. An example of a liquid ingredient that is used for the preparation of a chocolate-based drink is liquid chocolate, such as the liquid chocolate described in EP 1440910, which is hereby incorporated by reference in its entirety.

The gel particles are preferably included in the food or beverage composition in an amount of from 0.1 to 50%, preferably, from 5 to 25% by weight of the composition. The particles themselves have very little flavour contribution to the composition. Accordingly, they preferably do not form the bulk of the composition. Nevertheless, sufficient particles should be included to have a discernable effect on the mouthfeel. These weight percentages are given as a percentage of the total weight of, for example, the beverage concentrate, i.e. as percentage of the combined weight of the liquid and solid ingredients, not the final beverage.

According to a third aspect, there is provided the use of the composition disclosed herein in a food or beverage, or a food ingredient or beverage ingredient, as a fat substitute, a mouthfeel enhancer and/or an appetite suppressant. These technical benefits are discussed above for the various applications.

In particular, the use is for a food or beverage, or a food ingredient or beverage ingredient, to be pasteurised. This use is of particular importance, since other applications of thickeners has not yielded pasteurisable thickener formulations.

According to a fourth aspect there is provided a sealed machine-insertable beverage cartridge containing the composition of described herein, in particular a beverage composition, and in particular a liquid beverage composition:

Cartridges for use in a beverage dispensing systems typically comprise one or more chambers containing beverage concentrate. The cartridges are preferably single-serving cartridges. It will be understood that by the term "cartridge" as used herein is meant any package, container, sachet, receptacle or brewing or dilution device which contains a beverage concentrate as described herein. The cartridge may be rigid, semi-rigid or flexible. The cartridges may be formed of substantially air-and water-impermeable materials. In order to allow the beverage to brew and / or be diluted within the cartridges, the cartridges may comprise an inlet for the introduction of an aqueous medium into the cartridge, an outlet downstream of the inlet for the discharge of a beverage from the cartridge and a flow path connecting the inlet to the outlet. By providing the beverage concentrate within the flow path connecting the inlet and outlet of the cartridge, for example within a chamber, the cartridges conveniently provide an integrated means for mixing the beverage concentrate with an aqueous fluid

According to a fifth aspect there is provided a beverage preparation system comprising the beverage cartridge disclosed herein and means for passing an aqueous medium through the cartridge to produce a beverage.

The beverage dispenser used in this aspect of the present invention may comprise a housing containing a water heater, a water pump, optionally an air compressor, a control processor, a user interface and a head. The head may comprise a holder for holding, in use, the cartridge. The beverage preparation machine may also be provided with a water tank. The housing of the beverage dispenser may comprise a dispense station where dispensation of the beverage takes place. The dispense station may comprise a receptacle stand having a hollow interior forming a drip tray.

The head of the beverage dispenser may be located towards the top of the housing above the receptacle stand. The holder of the head may be shaped to receive the cartridge of the first aspect and to hold the cartridge in the correct orientation such that water may be passed through the cartridge. The holder and head may be provided with sealing means for sealing around a periphery of the cartridge to prevent by-pass flow of water in use. The head may be designed to direct flow of water downwardly through the cartridge so that beverage exits the cartridge through a lowermost surface of the cartridge. Alternatively, the head may be designed to direct flow of water upwardly through the cartridge so that beverage initially exits the cartridge through an uppermost surface of the cartridge before being ultimately directed downwardly to a receptacle

The system may be further provided with a means for mixing the beverage concentrate with an aqueous medium to form the beverage either in the cartridge itself or elsewhere in the beverage preparation system. The aqueous medium may typically be a fluid or liquid such as water or milk.

An example of a beverage dispenser that may be used in the present invention is described in PCT/GB2005/004113.

The cartridge and beverage dispensing system may be configured so that the beverage concentrate is mixed with the aqueous medium inside the cartridge; alternatively (or additionally), mixing with an aqueous medium may take place outside the cartridge within the beverage dispenser itself. In either case, the beverage dispensing system comprises an outlet downstream of the chamber(s) containing the beverage concentrate for the discharge of a beverage and a flow path connecting the concentrate chamber(s) to the outlet.

According to a sixth aspect there is provided a method for preparing a beverage, the method comprising mixing the beverage composition disclosed herein with an aqueous medium.

As will be appreciated, the method of the sixth aspect may be applied to the beverage preparation system of the fifth aspect to prepare a beverage.

The aqueous medium is generally water, but may be another aqueous medium such as milk. The aqueous medium is preferably added to the composition hot. That is, at a temperature of from 50°C to about 100°C, for example from about 70°C to about 95°C, such as about 85°C.

Preferably, when preparing a beverage according to the method of the sixth aspect, the dilution ratio for the ingredients and the aqueous beverage medium is preferably in the range of from 1:1 to 1:10, more preferably from 1:2 to 1:5.

The invention will now be described in relation to the following non-limiting figures, in which:
Figure 1 shows a schematic and a cross-section of a pin-stirrer adapted for use in the method disclosed herein:
Figure 2 shows the various apparatus components for employing the method disclosed herein.

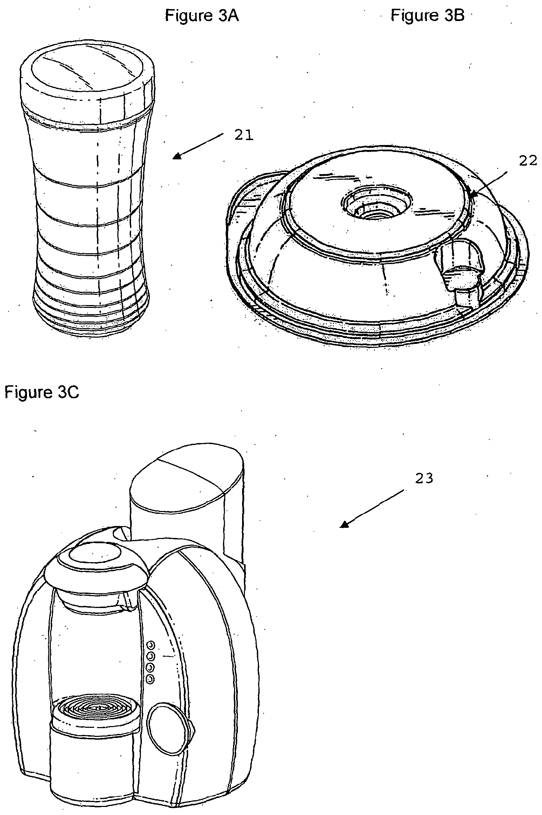

Figure 3A shows a typical package 21 for holding a composition as described herein, such as might be used for retail of a chocolate beverage product. Figure 3B shows a cartridge 22 suitable for holding a beverage composition and for use in a beverage producing machine 23. Figure 3C shows a beverage producing machine 23 suitable for use with the cartridge 22 shown in figure 3B.

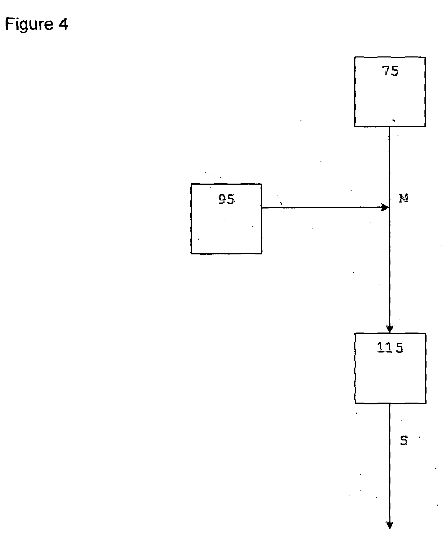

Figure 4 shows a flow chart of the method steps disclosed herein. In particular, the chart shows the mixing (M) of the alginate 75 and the calcium ions 95 to produce gel particles 115.

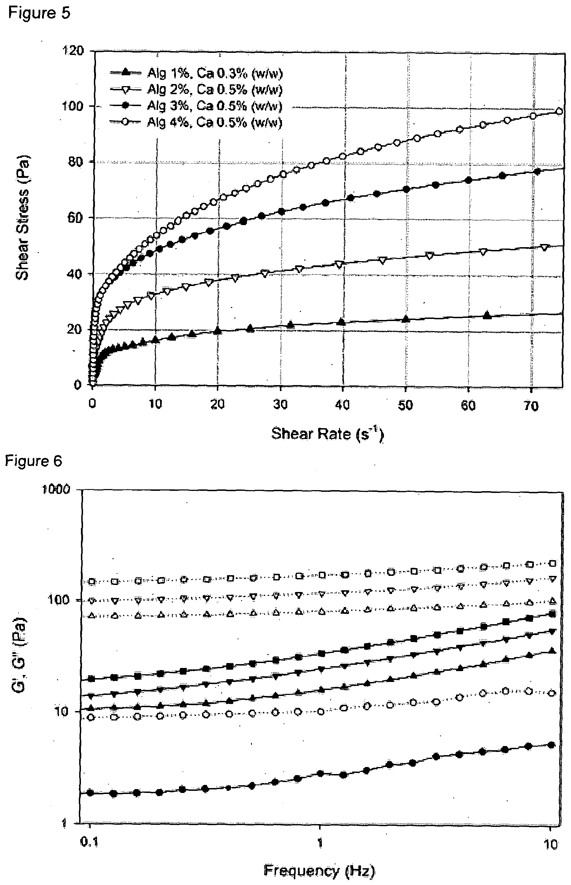

Figure 5 shows a plot of shear stress (Pa) on the y-axis against Shear rate (s⁻¹) on the x-axis. This demonstrates the persistence of fluid gel's yield stress after a shear-rest cycle. These results indicate that significant interparticle reactivity, presumably mediated by Ca⁺² interactions, persisted post processing and after the gel has been set.
Figure 6 shows a plot of G', G" (Pa) on the y-axis against frequency (Hz¹) on the x-axis. This shows the Frequency dependence of G' (open) and G" (closed) of alginate FG for polymer concentrations 1 % w/w (circle), 2%w/w(pyramid), 3%w/w (inverse pyramid), 4%w/w (square). Apparent yield stress (σ_{γ}) increased with increasing both particulate volume and particle stiffness and decreasing particle size, similarly to the increase of G' under the same conditions

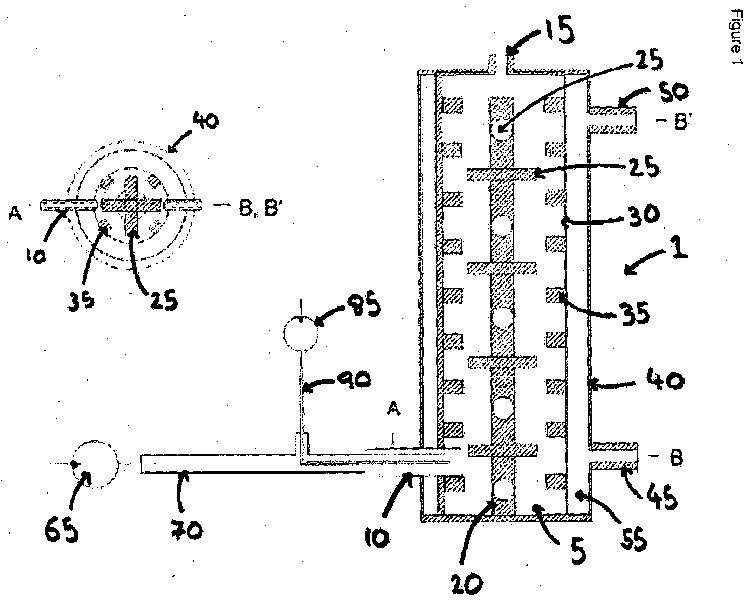

The preferred mixing device is a pin-stirrer. A schematic of an exemplary pin stirrer 1 is shown in Figure 1. The pin stirrer 1 includes a processing chamber 5 for holding the liquid or materials to be mixed. The processing chamber 5 has a long (for example, 172mm) cylindrical form having an inlet 10 and an outlet 15.

A central rotating shaft 20 is provided along the central axis of the cylindrical processing chamber 5. The shaft 20 is provided with a number of pins 25 extending perpendicular to the axis of the shaft. These pins 25 extend towards the outer wall 30 of the processing chamber 5. The outer wall 30 of the processing chamber 5 is also provided with a number of complementary projections or counter-pins 35. The pins 25 and the counter pins 35 typically are cylindrical in cross-section and have a diameter of 5mm.

The processing chamber 5 is provided with a cooling jacket 40. This is configured with a coolant outlet 45 and a coolant inlet 50 for circulating a cooling fluid 55, such as cold water, around the outside of the processing chamber 5, to cool the contents thereof.

The inlet 10 is arranged so that the components inserted into the processing chamber 5 are delivered in close proximity to the pins 25. This ensures immediate and thorough mixing. The inlet 10 is connected to an inlet system comprising: a source of alginate 60, an alginate pump 65 and an alginate duct 70 to deliver the alginate 75 to the processing chamber 5. The inlet system further includes: a source of calcium ions 60, such as a calcium chloride solution, a syringe pump 85 and a "calcium" duct 90 to deliver calcium ions 95 to the processing chamber 5. The calcium duct 90 is preferably coaxially located within the alginate duct 70, whereby the mixing of the calcium ions 95 and the alginate 75 will only take place at the high-shear mixing region at the terminus of the inlet 10. By way of example, the alginate duct 70 may have a diameter of 9.5mmm, whereas the calcium duct may have a diameter of 0.75mm.

An exemplary laboratory-scale pin stirrer 1 can operate in a continuous manner. The rotating shaft possesses 18 pins 25 consistently distributed and it is inserted into a jacketed vessel with 18 stationary pins 35. These counter pins 35 are positioned between those of the shaft 20 in a way that the flow against the rotating pins 25 is broken, increasing the degree of anisotropy of the flow field.

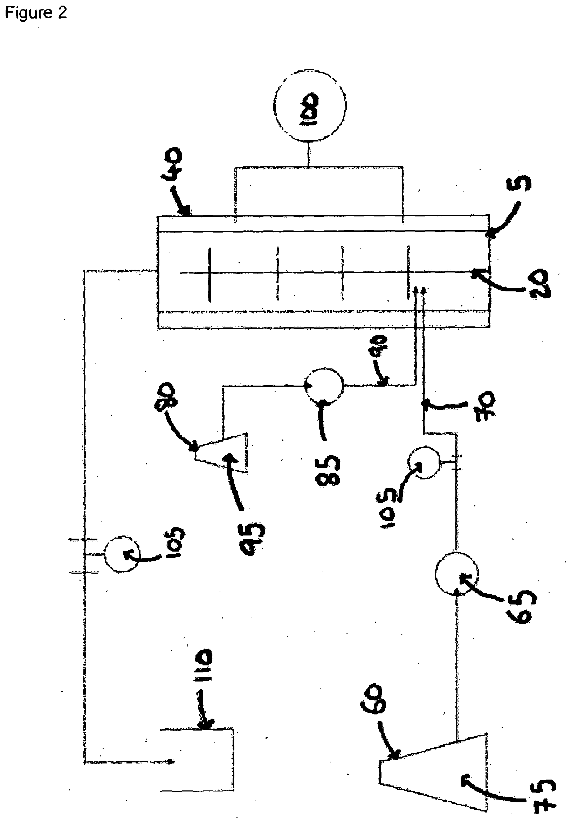

The broader system for preparing the particles disclosed herein is shown in figure 2. This figure shows the apparatus discussed above, including the coolant regeneration system 100, temperature measurement devices 105, and a reservoir 110 for collecting the product particles.

In use, alginate solutions are prepared by slowly adding the required amount of the biopolymer powder to cold deionised water. The obtained dispersions are then heated and stirred in a hot plate magnetic stirrer for 45 minutes at approximately at 95±5 °C to ensure complete solubilisation.

Reactants are injected separately in the pin-stirrer 1 with the aid of a peristaltic pump for the alginate solution and a syringe pump (such as manufactured by Cole-Parmer Instruments, London, UK) for the calcium chloride solution. Thus the alginate and calcium streams merged at the time of entering the main channel, inside the stirring vessel.

Silicone tubing connects all of the units within the process and a lid is used to prevent the water evaporation from the jar containing the hot alginate solution during the experiment.

In order to induce the creation of microparticles in the early stages of the aggregation process, the calcium chloride solution injection point is located as close as possible to the pin, in the high energy dissipation zone, so as to ensure rapid mixing of the two streams.

In an example, constant cooling rate is used to cool the samples from 56°C at the inlet to 12°C at the outlet of the jacketed stirrer vessel to guarantee reproducibility. The temperature of the fluid entering (Tᵢₙₗₑₜ) and exiting (Tₒᵤₜₗₑₜ) the pin-stirrer are recorded using thermocouples, and T_{jacket} is controlled via a recalculating water bath that ran through the jacket of the vessel. Exemplary settings are provided in the table below:

**Table 2**

| | | *Composition* | *Flow rate [ml*/*min]* | *Av. Particle size [µm]* |
|---|---|---|---|---|
| *Peristaltic pump* | | *Alginate 2.0%_{w}*_{/}*_{w}* | *25* | *>10* |
| *Syringe pump* | | *CaCl₂10 %*_{*w*/*w*} | *1* | |
| | | | | |

| | *Tᵢₙₗₑₜ[°C]* | *T_{jacket}[°C]* | *Tₒᵤₜₗₑₜ[°C]* | *Rotation speed [rpm]* |
|---|---|---|---|---|
| *C-Unit* | *56* | *5* | *12* | *1550* |

More details of the theory behind the invention will now be provided.

A new method has been developed for the production of alginate fluid gels. By using the turbulent flow field generated, especially within a pin stirrer, fluid gel particles can be produced in a reproducible and controlled manner. Using this approach yielded an average particle diameter smaller than 10 microns for all alginate fluid gels produced. A weak gel-like behaviour is reported for the produced materials, which displayed a gradual increase of G' upon increasing polymer concentration. Steady shear results revealed the existence of an apparent yield stress, indicating that a significant interparticle potential persisted after the production process had finished. Soft-tribology was used to assess the lubrication properties of Ca-alginate fluid gels. The entrainment of particles in the ball-on-disc contact resulted in a localised increase of friction in the mixed regime, which was found to be dependent on both particle intrinsic properties and the surface roughness of the disc. An increase of polymer concentration resulted in an overall decreased friction for systems with similar particle dimensions. These distinct but complementary functional responses of fluid gels, arising from increasing alginate concentration, offer real possibilities towards building microstructures with enhanced sensory attributes

The production of thermally set fluid gels has now been found to be possible in processes allowing control of both cooling rate and flow field, such as a jacketed pin stirrer. By modifying the process parameters (i.e. cooling rate, flow field), it is possible to match conformational ordering kinetics (reaction characteristic timescale) and timescale of the applied shear. In practical terms, the reason that it has not been possible previously to produce fluid gels from alginates arises from the nearly instantaneous and temperature independent sol-gel transition of the polymer.

According to the "egg-box model", the guluronate residues adopt a 2-fold symmetry giving rise to a buckled chain. Inter-chain association occurs by dimerization of chain sequences with the Ca^{2*} sandwiched within the dimer on specific sites along each of the interior surfaces and it takes place in the millisecond or microsecond timescale. An appropriate release of calcium salt is therefore crucial to ensure control of the gelation rate and the resulting fluid gel microstructure. A setting method using an in-situ release of internal Calcium salt (i.e. Ca-EDTA, CaCO₃) by change of pH could represent an option to gain control over the gelation kinetics.

The developed technique involves continuous pumping of the polymer and ion solutions into a jacketed pin-stirrer device. The injection of calcium near the impeller of the pin-stirrer allowed particles to be produced with a mean diameter smaller than 10 mm. Reproducibility and control over the crosslinking ion concentration was achieved by using a syringe pump. Overall, stable polymer microstructures, arising from a strong chelate type of binding, were achieved under specific conditions (i.e. polymer concentration and applied shear field). Contrary to thermo-reversible fluid gels, the resulting alginate gelled structures offer the advantage of stability towards heat treatment processes. The effects of shearing during gelation of alginates on the resulting microstructures have been investigated. These changes in morphology and structural entities appeared to have favourable and determinable consequences on the viscoelastic properties of the final particulate suspensions. A tribological characterisation was also carried out, which highlighted some common features existing between the lubrication response of Ca-induced alginates and thermoreversible fluid gels. More specifically, the effect of particle properties (size, elasticity) on the lubrication properties of the fluid gels was examined.

The invention will now be described in relation to the following non-limiting examples.

### Examples

### Materials

Sodium alginate (W201502) was purchased from Sigma-Aldrich (Sigma-Aldrich Company Ltd., Dorset, UK) and was used with no further purification. Alginate solutions were prepared by slowly adding the required amount of the biopolymer powder to cold distilled water. The obtained dispersions were then heated and stirred for 45 min at 95 °C to ensure complete solubilisation. Calcium chloride ,solutions were prepared by dissolving the required amount of CaCl₂ (C1016, Sigma-Aldrich Company Ltd., Dorset, UK) in distilled water.

Reactants were injected separately in the pin-stirrer device with the aid of a peristaltic pump.for the alginate solution and a syringe pump (Cole-Parmer Instruments, London, UK) for the calcium chloride solution. Thus the alginate and calcium streams merged at the time of entering the main channel, inside the stirring vessel.

In order to induce the creation of microparticles in the early stages of the aggregation process, the calcium chloride solution injection point was located as close as possible to the pin, in the high energy dissipation zone, in order to ensure rapid mixing of the two streams. An average residence time of 8 min and 1550 RPM shaft speed proved sufficient to create microparticles with a mean particle size below 10 mm. Regardless of the cold setting properties of alginate gels, material properties of the final gel can be greatly modified by a change in temperature during the sol-gel transition. In order to guarantee reproducibility of the sample preparation, a constant cooling rate was used to cool the samples from 55°C at the inlet to 10°C at the outlet of the jacketed stirrer vessel.

### Measuring Parameters

Rheological measurements: Steady shear and small strain oscillatory shear experiments were carried out in a Bohlin Gemini HR Nano stress-controlled Rheometer (Malvern Instruments Ltd., UK) with a 40mmdiameter, 4° truncated parallel plate geometry and a 1 mm gap. Samples were kept isothermally at 20° C during all rheological measurements.

Frequency sweep tests were performed at a stress within the linear viscoelastic region, while varying the frequency from 0.01 Hz to 1 Hz. The linear viscoelastic region was determined in a previous rheological characterisation by amplitude sweep measurements at frequency of 1 Hz.

Apparent yield stress values were initially obtained from stress ramp experiments. The applied shear stress was linearly increased at a constant rate for a period of time and the yield stress was calculated by extrapolation of the shear stress-shear rate plots to a zero shear rate. In ramp tests, the yielding process is affected by the applied ramp rate i.e. the lower the applied ramp rate, the smaller the critical stress observed. Therefore, stress ramp results were used to estimate an apparent yield stress value prior to creep experiments.

Constant stress (creep) experiments were carried out to identify the "true" yield stress. Fluid gels were subjected to a constant stress s [Pa] for 30 s and the deformation or strain g was recorded as a function of time. The above test was repeated increasing the stress in intervals of 1 Pa from5 Pa to 30 Pa for the 1% (w/w) and 2% (w/w) systems and from 20 Pa to 40 Pa for the systems with 3% (wlw) and 4% (w/w) concentration. A set of creep curves with a 30 s rest period between each creep test were generated at various applied shear stresses and the compliance was plotted against time. The material behaves as a solid if the applied stress is below the yield stress and the measured strain is small and independent of time after an immediate elastic response. When the applied stress exceeds the yield stress of the material, the strain tends to infinity until constant strain rate is achieved corresponding to a flow condition in the material. The yield stress value was identified as the critical stress which produces a large creep rate increase.

A diffusion-setting process with a nearly instantaneous binding reaction occurs between Ca²⁺ ions and available COO groups of alginate chain when directly mixing an active form Calcium with the polymer solution. The particle properties appear to be the result of a competition between shearing and the formation of gelled clusters via ionic crosslinking (mixing and diffusion). Distortion of the microstructure occurs when the timescale associated with flow is smaller than the timescale associated with local scale diffusion (i.e. reciprocal of shear rate is smaller than the time for diffusion).

A pin-stirrer rotation speed of 1550 RPM with a residence time of 8 min was employed to produce all fluid gel systems. This shear rate, together with the relatively small mean particle diameter (<10 mm), implies that the main driver for the alginate fluid gel particles formation within this process is via mechanical fracture of a forming gel matrix. Controlling the introduction of the cross-linking ions avoids post-production molecular re-ordering and thus maintains stable alginate fluid gels.

The applied shear rate yielded significantly bigger particle for the 1% (w/w) alginate (mean calculated diameter of 9.5 microns) than for the more concentrated fluid gels (3% and 4% (w/w)) which, from microscopical examination, were found to be of similar dimensions at approximately 3 microns. Bulk quiescent gels of increased alginate concentrations are known to resist larger deformation strains before breaking down into smaller particles compared to alginate quiescent gels with lower polymer concentration Thus, bigger particles are only to be expected in the case of a gel that forms quiescently and that is subsequently fractured by mechanical forces. Likewise, shearing a quiescent gel typically leads to particles with serrated contours

Conversely, an increased particle size was found for fluid gels produced with lower polymer concentration and particles did not exhibit sharp edges or serrated contours Therefore, the authors' hypothesis is that both mixing of calcium and network formation compete the shear induced break-up of the network being formed. In such processes, the local shear stresses experienced by the growing particles control their equilibrium size. Upon decreasing concentration, lower shear stresses would act on the initial gel nuclei due to an overall decreased viscosity. This relates to the concentration of disordered polymer chains in the matrix which, as the particles are formed, is lower for the less concentrated system. Hence, the gross increase in the particulate size as a result of decreasing polymer concentration:

In addition, this less dense matrix results in faster diffusion rates of Calcium through the gelled matrix. In these conditions, the characteristic time for mixing the two liquid phases at molecular level (micromixing) would also increase, due to both low viscosity and increase in diffusion coefficient. These mechanisms therefore give advantage to the gel formation over the breaking process.

The proposed mechanism is then as follows. The gelation is controlled by mixing between alginate and calcium in equilibrium with the breaking up process. If the mixing is fast (high-shear) then bigger and irregularly shaped particles are formed, resulting from the breaking of fast growing particles. If the mixing is slower, the breaking process dominates and smaller and regular shaped particles are formed (i.e. higher concentrated systems).

The yield stress results have shown that a significant interparticle reactivity, presumably mediated by Ca²⁺ interactions, persisted post processing and after the gel was set. Therefore, from a rheological perspective, alginate fluid gels may be regarded as a suspension of charged particles whose rheology is dominated by inter-particle interactions over Brownian motion and hydrodynamic forces. As a conclusion of this rheological study, the produced alginate fluid gels have been characterised as suspensions comprising essentially non-aggregated particles which despite not being in a close packed lattice, displayed a markedly gel-like behaviour and which can only flow past one another appreciably if a large enough stress (greater than the apparent yield stress) is applied. These unique properties can be advantageously be used to form materials with enhanced sensory attributes in many food engineering processes. Concretely, it can be utilized as the dispersed aqueous phase in fat continuous spreads allowing the inclusion of destabilizing ingredients as these are "captured" in the microgels.

Enhanced viscosity and particle elasticity, through raising alginate concentration, has been shown to lower friction. Likewise, small particles were driven to the gap between the ball and the disk without increasing friction. These results suggest the advantageous impact that the presence of small (ideally less than 10 mm) alginate gelled particles would have upon lubrication and reinforces the idea of using fluid gel particles to replace oil droplets in an o/w emulsion.

Furthermore, the competing mechanisms responsible for the particles formation are the break-up of gelled clusters and the formation of those clusters via ionic crosslinking. When increasing polymer concentration, a slower Calcium diffusion through the gelled matrix and the non-gelled suspension occurs due to the higher viscosity. As a consequence, there is more breaking up of the forming particles and less ionic crosslinking, which explains the decreased particle dimensions upon increasing alginate concentration. Applying shear during gelation of Ca-alginate systems greatly alters the resulting morphology of the structural entities, allowing the microstructure to be manipulated through controlling processing parameters. In this way, similar fluid gel structures yielding comparable material properties were obtained from different alginate concentrations.

From a rheological perspective, the produced fluid gels were described as suspensions of interactive gelled particles dispersed in a non-gelled matrix, displaying a weak gel-like flow behaviour and high-shear limiting viscosities. An increase of polymer concentration resulted in higher yield stress and higher viscosities once fluid gels started flowing. The lubrication response of alginate fluid gels was also examined. A localised increase of friction corresponding to a critical entrainment velocity was found upon increasing entrainment speed. This velocity at which particles are fully entrained was found to be inversely proportional to particle elasticity and particle size.

Further studies were conducted with slow release calcium ions. Calcium was released from CaCO₃ triggered by the reaction with protons from the slow hydrolysis of a glucono-δ-lactone (GDL). This allowed the conformational ordering kinetics to be matched to the time scale of the applied mechanical forces.

Fluid gels with larger particles, produced at a lower shear rate, displayed enhanced viscosities compared to those of fluid gels containing smaller particles. It is thus demonstrated that the applied shear rate determines particle size and consequently its viscosity. The applied shear rate dependence of the viscosity increase (Δη) during the ordering transition can be fitted using a power-law relationship. Furthermore, a first order kinetic equation has been used to describe the kinetics of inter-particle interaction post-processing. The rate of the reaction has been shown independent of the applied shear rate (Table 1).

Fluid gel formation was also investigated with a range of CaCO₃ concentrations. This was carried out with two alginate samples of different molecular weights but with comparable Guluronate (G)/Mannuronate(M) ratios. Fluid gels formed from high molecular weight polymers exhibited greater viscosities, faster sol-gel transitions, as well as higher Δη during formation. This suggested higher chain density between the cross-linkers. Results revealed that the Δη during production increased significantly with greater CaCO₃ doses until a saturated concentration, corresponding to the critical mole fraction ratio (R[Ca]/[G]), was reached. This critical R[Ca]/[G] value was found to be 0.5 for both alginate samples and it is required for strong alginate inter-chain interaction to occur. This work has shown that desirable properties can be achieved by the choice of alginate molecular weight even at the same G/M block composition.

### Thermal stability

A T-disc was filled with 20g of fluid gel and hermetically sealed. T-Disc filled with fluid gels were then placed in a water bath set to a defined temperature. Samples were incubated at 130°C for 8 minutes.

Steady shear and small strain oscillatory shear experiments were carried out in a Bohlin Gemini HR Nano stress-controlled Rheometer (Malvern Instruments Ltd., UK) with a 40 mm diameter, 4° truncated parallel plate geometry and a 1 mm gap. Samples were kept isothermally at 20° C during all rheological measurements.

Frequency sweep tests were performed at a stress within the linear viscoelastic region, while varying the frequency from 0.01 Hz to 1 Hz. The linear viscoelastic region was determined in a previous rheological characterisation by amplitude sweep measurements at frequency of 1 Hz.

A Seteram µDSC3 evo Dynamic Scanning Calorimeter (SETARAM Instrumentation, UK) was used to measure possible enthalpies and temperatures of thermal transitions. Alginate fluid gels (0.7 ± 0.05 g) were loaded into the sample holder at 20°C. The reference cell was filled with an equal mass of deionised water in order to cancel out the temperature dependence of the specific heat capacity.

Fluid gels were tested by initially heating from 20°C to 110°C and then cooling from 110°C to 20°C. Both heating and cooling were carried out at a ramp rate of 0.5 °C/min.

Contrary to thermoreversible fluid gels, which melt when heated above their equilibrium melting temperature Tₘₑₗₜ and subsequently cool down quiescently, the alginate fluid gel macrostructure remain unaltered during heat treatment. DSC results revealed that no thermal transitions occurred from 20°C to 110°C (Fig. 1) which confirms that, unlike agar, gellan gum or carrageenan, alginate fluid gels are thermostable in the sense that they not dissolve above a critical temperature.

In order to investigate thermally induced changes in the microstructure of alginate fluid gels, viscometry measurements were performed 48 hours before and after fluid gels were subjected to heat treatment (Retort process).

It appears that treated and unheated samples exhibited a similar shear thinning behaviour, arising from the gradual break up of interparticle bridges induced by shear. The breaking of inter-particle bridges during the rheological measurement implies that the bulk viscosity is a direct function of the intrinsic elasticity and packing of the particles. The fact that samples exhibited similar viscosity when measured at a number of shear rates indicates that the relative flow of particles past one another was not affected by the Retort process. For both heated and unheated fluid gels, the interaction between closely packed particles allowed an elastic network to form at rest whilst flow was measured under applied shear.

To gain further insight into the structural events induced by heat treatment, small oscillatory shear experiments were carried out. Frequency sweep measurements indicated the almost uniform gel-like response over the frequency studied for both samples. The mechanical properties of both samples appeared to lie somewhere between those of a "weak" and "strong" gel, with G' significantly greater than G" but more dependent on frequency than in the case of "strong" or quiescent gel. These results along with the DSC data confirm that no melting (hydrolysis of the alginate chain) occurred upon heating and consequently no quiescent re-ordering took place during the cooling.

A small decrease in the measured G' value was found for the heated fluid gel samples. This is believed to be due to a breaking and rearrangement of junction zones rather than a hydrolysis of the alginate into shorted chains. The hydrolysis of alginate would result in a weakening of the overall interactions between the polysaccharide residues and the rest of the gelled matrix because the number of electrostatic charges decreases with length of the alginate chain. This would lead to a viscous liquid material with a mechanical spectra where G"> G'. On the contrary, fluid gels exhibited a weak gel like response.

A number of further conclusions could be drawn from the experimental data above. In particular, mechanical properties for the particles were found to lie somewhere between those of a weak and strong gel, with G' significantly greater than G" but more dependent on frequency than in the case of strong or quiescent gel. Equivalent particulate phase volumes can be obtained through processing (i.e. applied shear rate), and thus similar material properties. The entrainment of particles in the ball-on-disc contact resulted in a localised increase of friction in the mixed regime, which was found to be dependent on both particle intrinsic properties and the surface roughness of the disc.

Although preferred embodiments of the invention have been described herein in detail, it will be understood by those skilled in the art that variations may be made thereto without departing from the scope of the appended claims.

## Claims

1. A method for the manufacture of edible gel particles having a mean longest diameter of from 0.1 to 20 µm, the method comprising:
high-shear mixing a solution comprising an alginate, while adding a source of calcium ions to the solution,
wherein the source of calcium ions comprises calcium carbonate, and
wherein the solution and/or the source of calcium ions comprises a source of slowly released protons.

2. The method according to claim 1, wherein the gel particles have a mean longest diameter of from 1 to 10 µm.

3. The method according to any of the preceding claims, wherein the solution is an aqueous solution and comprises an alginate in an amount of from 0.1 to 10% w/w.

4. The method according to any of the preceding claims, wherein the source of slowly released protons is glucono-δ-lactone.

5. The method according to any of the preceding claims, wherein the high-shear mixing is conducted in a pin stirrer.

6. The method according to claim 5, wherein the high-shear mixing is conducted for an average residence time of from 5 to 15 minutes and/or at a rotational mixing speed to from 1000 to 2000 RPM.

7. The method according to any of the preceding claims, wherein the source of calcium ions is added by injection into a high-shear region of the high-shear-mixed solution.

8. The method according to any of the preceding claims, further comprising spray drying the gel particles.

9. The method according to any of the preceding claims, the method further involving a step of adding the gel particles into a beverage composition or food composition.

10. A composition comprising edible gel particles having a mean longest diameter of from 0.1 to 20 µm, obtainable by the method of any of claims 1 to 9.

11. The composition of claim 10, being a beverage composition and further comprising a flavouring component, preferably for a coffee, milk or chocolate beverage.

12. The beverage composition according to claim 11 in liquid form.

13. A sealed machine-insertable beverage cartridge containing the composition of claim 10 or the beverage composition of claim 11 or claim 12.

14. A beverage preparation system comprising the beverage cartridge of claim 13 and means for passing an aqueous medium through the cartridge to produce a beverage.

15. A method for preparing a beverage, the method comprising mixing the beverage composition according to claim 11 or claim 12 with an aqueous medium.

## Patentansprüche

1. Verfahren zur Herstellung von essbaren Gelpartikeln mit einem mittleren längsten Durchmesser von 0,1 bis 20 µm, wobei das Verfahren aufweist:
Mischen einer ein Alginat enthaltenden Lösung mit hoher Scherkraft, während zur Lösung eine Quelle für Calciumionen hinzugegeben wird,
wobei die Quelle für Calciumionen Calciumcarbonat umfasst und
wobei die Lösung und/oder die Quelle für Calciumionen eine Quelle für langsam abgegebene Protonen umfasst.

2. Verfahren nach Anspruch 1, wobei die Gelpartikel einen mittleren längsten Durchmesser von 1 bis 10 µm aufweisen.

3. Verfahren nach einem der vorhergehenden Ansprüche, wobei die Lösung eine wässrige Lösung ist und ein Alginat in einer Menge von 0,1 bis 10 Gew.-% aufweist.

4. Verfahren nach einem der vorhergehenden Ansprüche, wobei die Quelle für langsam abgegebene Protonen Glucono- δ-lacton ist.

5. Verfahren nach einem der vorhergehenden Ansprüche, wobei das Mischen mit hoher Scherkraft in einem Stiftrührwerk erfolgt.

6. Verfahren nach Anspruch 5, wobei das Mischen mit hoher Scherkraft mit einer durchschnittlichen Verweildauer von 5 bis 15 Minuten und/oder mit einer Mischdrehzahl von 1000 bis 2000 UpM erfolgt.

7. Verfahren nach einem der vorhergehenden Ansprüche, wobei die Quelle für Calciumionen durch Injizieren in einen Bereich der mit hoher Scherkraft gemischten Lösung erfolgt, an dem eine hohe Scherkraft vorliegt.

8. Verfahren nach einem der vorhergehenden Ansprüche, das ferner ein Sprühtrocknen der Gelpartikel umfasst.

9. Verfahren nach einem der vorhergehenden Ansprüche, wobei das Verfahren ferner einen Schritt umfasst, um die Gelpartikel zu einer Getränkezusammensetzung oder Nahrungsmittelzusammensetzung hinzuzugeben.

10. Zusammensetzung, die essbare Gelpartikel mit einem mittleren längsten Durchmesser von 0,1 bis 20 µm aufweist, erhältlich durch das Verfahren nach einem der Ansprüche 1 bis 9.

11. Zusammensetzung nach Anspruch 10, bei der es sich um eine Getränkezusammensetzung handelt und die ferner eine Aromakomponente, vorzugsweise für ein Kaffee-, Milch- oder Schokoladengetränk, aufweist.

12. Getränkezusammensetzung nach Anspruch 11 in flüssiger Form.

13. Versiegelte, in eine Maschine einsetzbare Getränkekartusche, die eine Zusammensetzung nach Anspruch 10 oder eine Getränkezusammensetzung nach Anspruch 11 oder Anspruch 12 aufweist.

14. Getränkezubereitungssystem, das eine Getränkekartusche nach Anspruch 13 und eine Einrichtung zum Hindurchführen eines wässrigen Mediums durch die Kartusche für die Herstellung eines Getränks aufweist.

15. Verfahren zum Herstellen eines Getränks, wobei das Verfahren ein Mischen der Getränkezusammensetzung nach Anspruch 11 oder Anspruch 12 mit einem wässrigen Medium umfasst.

## Revendications

1. Procédé de fabrication de particules de gel comestibles ayant un plus grand diamètre moyen allant de 0,1 à 20 µm, le procédé comprenant le fait :
de mélanger, à cisaillement élevé, une solution comprenant un alginate, tout en ajoutant une source d'ions calcium à la solution,
dans lequel la source d'ions calcium comprend du carbonate de calcium, et
dans lequel la solution et/ou la source d'ions calcium comprend une source de protons lentement libérés.

2. Procédé selon la revendication 1, dans lequel les particules de gel ont un plus grand diamètre moyen allant de 1 à 10 µm.

3. Procédé selon l'une des revendications précédentes, dans lequel la solution est une solution aqueuse et comprend un alginate en une quantité allant de 0,1 à 10% p/p.

4. Procédé selon l'une des revendications précédentes, dans lequel la source de protons lentement libérés est la glucono-δ-lactone.

5. Procédé selon l'une des revendications précédentes, dans lequel le mélange à cisaillement élevé est effectué dans un agitateur à broches.

6. Procédé selon la revendication 5, dans lequel le mélange à cisaillement élevé est effectué pendant un temps de séjour moyen allant de 5 à 15 minutes et/ou à une vitesse de mélange par rotation allant de 1000 à 2000 tr/min.

7. Procédé selon l'une des revendications précédentes, dans lequel la source d'ions calcium est ajoutée par injection de la solution mélangée à cisaillement élevé dans une région à cisaillement élevé.

8. Procédé selon l'une des revendications précédentes, comprenant en outre le séchage par pulvérisation des particules de gel.

9. Procédé selon l'une des revendications précédentes, le procédé impliquant en outre une étape d'ajout des particules de gel dans une composition de boisson ou une composition des aliments.

10. Composition comprenant des particules de gel comestibles ayant un plus grand diamètre moyen allant de 0,1 à 20 µm, pouvant être obtenue par le procédé de l'une des revendications 1 à 9.

11. Composition de la revendication 10, qui est une composition de boisson et comprenant en outre un composant aromatisant, de préférence pour une boisson à base de café, à base de lait ou une boisson chocolatée.

12. Composition de boisson selon la revendication 11 sous forme liquide.

13. Cartouche de boisson scellée pouvant être insérée dans une machine contenant la composition de la revendication 10 ou la composition de boisson de la revendication 11 ou 12.

14. Système de préparation de boisson comprenant la cartouche de boisson de la revendication 13 et un moyen pour faire passer un milieu aqueux à travers la cartouche afin de produire une boisson.

15. Procédé de préparation d'une boisson, le procédé comprenant le mélange de la composition de boisson selon la revendication 11 ou 12 avec un milieu aqueux.
